# EUROPÄISCHE PATENTANMELDUNG

(11) **EP 3 599 678 A1**
(43) Veröffentlichungstag der Anmeldung: **29.01.2020**
(21) Anmeldenummer: 18186108.9
(22) Anmeldetag: 27.07.2018
(51) Int. Cl.: H01R 39/08, H02K 9/28

(54) **SCHLEIFRING, SCHLEIFRINGEINHEIT, ELEKTRISCHE MASCHINE UND WINDKRAFTANLAGE**

(71) Anmelder: Siemens Aktiengesellschaft, 80333 München (DE)
(72) Erfinder: BINDER, Herbert, 94127 Neuburg (DE); GRUBER, Robert, 94099 Ruhstorf (DE); MEMMINGER, Oliver, 94127 Neuburg a. Inn. (DE); SVACH, Roman, 76326 Luhacovice (CZ)

(57) **Zusammenfassung**

Die Erfindung betrifft einen Schleifring (1), eine Schleifringeinheit (17) und eine elektrische Maschine, insbesondere zum Einsatz in einer Windkraftanlage. Der Schleifring (1) umfasst Isolierbereiche (9) und jeweils zwischen den Isolierbereichen (9) angeordnete Kontaktbereiche (5). Die Kontaktbereiche (5) sind jeweils zylinderförmig ausgebildet und weisen an ihrer Mantelfläche Kontaktbereiche (5a) auf. Die Kontaktbereiche (5a) sind von einer Ausprägung (7) in tangentialer Richtung (t) durchtrennt. Die Aussparung (7) erstreckt sich soweit in den Kontaktbereich (5), so dass Öffnungen (10), welche sich in axialer Richtung (z) durch den Kontaktbereich (5) führen, in die Aussparung (7) münden. Ein Luftstrom (15), der in axialer Richtung (z) verläuft, wird durch die Öffnungen (10) in die Aussparung (7) überführt und in einen Luftstrom (15) in radialer Richtung (r) umgeleitet. Einprägungen (8) an der Unterseite der Aussparung (7) verstärken bei einer Drehbewegung des Schleifrings (1) den Luftstrom (15) in radialer Richtung (r). Der Luftstrom (15) dient zur Kühlung von Schleifringelementen (11) und der Innenseite der Aussparung (7), wobei die Schleifringelemente (11) zur Übertragung von elektrischer Leistung, insbesondere des Rotorstroms, auf den Schleifring (1) vorgesehen sind.

## Beschreibung

Die Erfindung betrifft einen Schleifring und eine Schleifringeinheit. Weiter betrifft die Erfindung eine elektrische Maschine und eine Windkraftanlage.

Große elektrische Maschinen, insbesondere Generatoren für Windkraftanlagen umfassen zuweilen Schleifringeinheiten zur Übertragung elektrischer Energie von einer stationären Einheit auf einen Rotor.

Schleifringeinheiten übertragen oft hohe Ströme. Daher sind Schleifringe, insbesondere bei der Übertragung von Energiemengen im Megawatt-Bereich, starken thermischen Belastungen ausgesetzt. Daher müssen die Schleifringeinheiten gekühlt werden.

Eine Möglichkeit zur Kühlung der Schleifringeinheit oder des Schleifrings ist ein zusätzlicher Lüfter (Fremdbelüftung). Dies ist jedoch kompliziert und vergrößert eine Schleifringeinheit erheblich.

Weitere Maßnahmen der Kühlung, wie in EP 3 322 047 A1 vorgestellt, sind gerade bei der Übertragung großer Mengen elektrischer Energie oft unzureichend.

Es ist daher Aufgabe der Erfindung, einen Schleifring oder eine Schleifringeinheit bereitzustellen, bei dem bzw. der die Kühlung verbessert ist.

Die Aufgabe wird durch einen Schleifring gemäß Anspruch 1 gelöst. Die Aufgabe wird weiter durch eine Schleifringeinheit nach Anspruch 10 gelöst. Eine elektrische Maschine und eine Windkraftanlage mit einem solchen Schleifring lösen die Aufgabe ebenfalls.

Der Erfindung liegt die Erkenntnis zu Grunde, dass ein Schleifring Kontaktbereiche, vorzugsweise aus einem gut elektrisch leitfähigen Werkstoff wie Bronze oder Edelstahl ausgebildet, bei Aufnahme großer elektrischer Leistungen stark erwärmen und daher mit einer größtmöglichen Fläche gekühlt werden sollten. Hierzu weisen die Kontaktbereiche eine tangential ausgestaltete Aussparung auf, wobei die Aussparung einerseits zur Vergrößerung der zu kühlenden Fläche beiträgt. Andererseits kann die Aussparung zur Erzeugung eines radial verlaufenden Luftstroms beitragen. Der radial verlaufende Luftstrom dient zur Kühlung von Schleifringelementen. Vorzugsweise sind auch die Schleifringelemente zweiteilig und/oder mit einer Aussparung ausgeführt. Insbesondere durch eine zweiteilige Ausführung des Schleifringelements weist das Schleifringelement zusätzliche Oberflächen auf, die von einem Luftstrom gekühlt werden können. Die Schleifringelemente sind vorzugsweise als Schleifringbürsten ausgebildet. Die Schleifringelemente können durch den radial verlaufenden Luftstrom besonders gut gekühlt werden.

Der Schleifring dient insbesondere für den Einsatz in einer Windkraftanlage. Der Schleifring umfasst zumindest einen Kontaktbereich und Isolationsbereiche, wobei die Isolationsbereiche und die Kontaktbereiche auf einer Achse benachbart zueinander angeordnet sind, wobei der jeweilige Kontaktbereich an seiner Mantelfläche eine Kontaktfläche aufweist, wobei der Kontaktbereich eine in tangentialer Richtung verlaufende Aussparung aufweist, wobei die jeweilige axiale Stirnseite des Kontaktbereichs, insbesondere in einer Ringfläche, Öffnungen aufweist, dadurch gekennzeichnet, dass die Öffnungen jeweils in die Aussparung führen.

Die Isolierbereiche sind vorzugsweise aus einem Kunststoff oder einem Keramik-Werkstoff ausgebildet. Vorzugsweise sind die Isolierbereiche jeweils an den Stirnseiten des jeweiligen Kontaktbereiches angeordnet.

Vorzugsweise umfasst ein Schleifring drei Kontaktbereiche für drei elektrische Phasen und vier Isolierbereiche. Die Kontaktbereiche und die Isolierbereiche sind derart angeordnet, dass der jeweilige Kontaktbereich jeweils von einem Isolierbereich getrennt ist. Weiter vorteilhaft ist an den axialen Stirnseiten der Kontaktbereiche jeweils ein Isolierbereich angeordnet.

Vorzugsweise sind die Kontaktbereiche und die Isolierbereiche miteinander befestigt. Als Befestigungsmittel ist eine Klemmverbindung, eine Schraubverbindung oder eine Klebeverbindung geeignet.

Weiter weist der jeweilige Kontaktbereich und der jeweilige Isolierbereich eine mittig angeordnete Bohrung zur Aufnahme der Achse auf.

Der jeweilige Kontaktbereich ist vorzugsweise zylinderförmig ausgebildet, wobei die Mantelfläche des Kontaktbereiches die Kontaktfläche ausbildet. Die Kontaktfläche ist vorzugsweise aus einem gut elektrisch leitfähigen Werkstoff hergestellt.

Die Kontaktflächen sind zur Beaufschlagung mit den Schleifringelementen ausgebildet. Der jeweilige Kontaktbereich weist, vorzugsweise in der axialen Mitte, die Aussparung auf. Die Aussparung verläuft vorzugsweise in tangentialer Richtung um die Mantelfläche herum. Die Aussparung ist vorzugsweise mit einem im Wesentlichen rechteckigen Querschnitt ausgebildet.

Die Aussparung teilt die Kontaktfläche des jeweiligen Kontaktbereiches in zwei durch die Aussparung in axialer Richtung beabstandete Kontaktflächen. Die jeweilige Kontaktfläche weist vorzugsweise eine in axialer Richtung verlaufende Rille auf. Die Rille dient vorzugsweise zur Staubentfernung. Zudem verbessert eine Rille in der Kontaktfläche die Kühlung der Kontaktfläche.

Die Öffnungen verlaufen vorzugsweise in axialer Richtung. Die Öffnungen bilden vorzugsweise einen axialen Zugang zu der Aussparung. Die Öffnungen sind vorzugsweise in der Ringfläche positioniert. Die Öffnungen sind jeweils in tangentialer Richtung beabstandet.

Die Öffnungen dienen zur Überführung eines, in axialer Richtung verlaufenden, Luftstromes in die Aussparung. Die Aussparung dient vorzugsweise zur Abzweigung eines Anteils des Luftstroms, um den Anteil in radialer Richtung umzuleiten.

Aufprägungen, die an einer Unterseite der Aussparung angeordnet sind, können einen Luftstrom in radialer Richtung durch die Aussparung unterstützen.

Die Aussparung weist vorzugsweise eine Tiefe in axialer Richtung auf. Die Tiefe der Aussparung entspricht etwa der Differenz der Radien des jeweiligen Kontaktbereiches und des Isolierbereiches.

Durch die Erfindung kann die Kühlung des Schleifringes verbessert werden. Weiter können die Schleifringelemente von ihrer Unterseite gekühlt werden.

Durch die verbesserte Kühlung kann der Schleifring kompakter und damit leichter ausgebildet werden.

In einer vorteilhaften Ausgestaltung der Erfindung grenzen die Kontaktbereiche an ihrer jeweiligen Stirnseite an einen Isolierbereich.

Vorzugsweise sind die Kontaktbereiche und die Isolierbereiche jeweils als Zylinder geformt. Die Zylinder sind einander berührend auf der Achse angeordnet. Vorzugsweise sind die Isolierbereiche und die Kontaktbereiche jeweils miteinander fest verbunden.

Alternativ kann zumindest einer der Kontaktbereiche auf einen Isolierbereich befestigt sein. In dieser Ausgestaltung ist der jeweilige Kontaktbereich als Kreisring ausgeführt, der auf einem Abschnitt eines Isolierbereiches aufgesetzt ist, wobei in dem Kontaktbereich der Isolierbereich einen Außendurchmesser aufweist, der in etwa dem Innendurchmesser des kreisring-förmigen Isolierbereiches entspricht.

Vorzugsweise weisen die Isolierbereiche Öffnungen auf, wobei die jeweilige Öffnung zur Durchführung eines elektrischen Kontaktes von einem Kontaktelement zu dem jeweiligen Kontaktbereich vorgesehen ist.

Insbesondere durch die angrenzende Anordnung der Isolierbereiche und der Kontaktbereiche ist der Schleifring besonders kompakt und stabil ausgebildet.

In einer weiteren vorteilhaften Ausgestaltung der Erfindung ist der jeweilige Kontaktbereich auf der Mantelfläche des jeweiligen Isolierbereichs angeordnet.

Zumindest einer der Kontaktbereiche kann auf einen Isolierbereich befestigt sein. In dieser Ausgestaltung ist der jeweilige Kontaktbereich als Kreisring ausgeführt, der auf einem Abschnitt eines Isolierbereiches aufgesetzt ist, wobei in dem Kontaktbereich der Isolierbereich einen Außendurchmesser aufweist, der in etwa dem Innendurchmesser des kreisring-förmigen Isolierbereiches entspricht. Vorzugsweise erfolgt die Befestigung des Kontaktbereiches auf einer Mantelfläche des Isolierbereiches durch eine Pressverbindung oder eine Klebeverbindung.

Durch die bereichsweise überlappende Ausführung der Kontaktbereiche über die Isolierbereiche, ist eine besonders kompakte Ausgestaltung des Schleifrings möglich.

In einer vorteilhaften Ausgestaltung weisen die Öffnungen an der Stirnseite des jeweiligen Kontaktbereiches einen größeren Durchmesser aufweisen als in der Aussparung.

Die Öffnungen reichen von der jeweiligen Stirnseite des Kontaktbereiches in die Aussparung. Die Öffnungen weisen vorzugsweise einen runden Querschnitt auf. Die Öffnungen verlaufen vorteilhaft etwa in axialer Richtung. Die Öffnungen weisen vorzugsweise einen größeren Querschnitt an der jeweiligen Stirnseite auf als bei der Schnittebene mit der Aussparung.

Die Öffnungen können durch ein spanabhebendes Fertigungsverfahren, insbesondere durch ein Bohren oder ein Fräsen, in den Kontaktbereich eingebracht werden. Eine vergrößerte Aussparung kann durch Senken ausgebildet werden.

Durch einen bereichsweise vergrößerten Querschnitt der Öffnung kann der Luftstrom mit einem geringeren Strömungswiderstand durch die Öffnung strömen.

In einer weiteren vorteilhaften Ausgestaltung der Erfindung weist die Mantelfläche des jeweiligen Kontaktbereiches einen größeren Radius als die jeweils angrenzenden Isolierbereiche auf.

Durch die Ausführung stehen die Kontaktbereiche über die Isolierbereiche hervor. Das Hervorstehen des Kontaktbereiches über den jeweiligen Isolierbereich bildet an der jeweiligen Stirnfläche des Kontaktbereiches, der nicht von einem Isolierbereich abgedeckt ist, die Ringfläche auf.

Die Öffnungen, die im Bereich der Ringfläche positioniert sind, können den axial verlaufenden Luftstrom besonders gut in die Aussparung führen.

In einer weiteren vorteilhaften Ausgestaltung der Erfindung weist die jeweilige Kontaktfläche eine Rille auf.

Die Rille dient vorteilhaft zur weiteren Verbesserung der Kühlung der Kühlung und damit der Kühlung des Schleifrings. Durch die verbesserte Führung des Schleifringelements erfolgt darüber hinaus eine besonders gleichmäße Übertragung der elektrischen Leistung von dem jeweiligen Schleifringelement auf den jeweiligen Kontaktbereich. Schließlich trägt eine Rille zur Vermeidung von Staub auf der Kontaktfläche bei.

In einer weiteren vorteilhaften Ausgestaltung der Erfindung ist der Schleifring zur Übertragung von mindestens 100 Kilowatt, insbesondere mindestens einem Megawatt, vorzugsweise mindestens 5 Megawatt, ausgebildet.

Insbesondere im industriellen Umfeld oder bei der Energieerzeugung werden in der Regel elektrische Leistungen im Bereich von hunderten Kilowatt bis in den Bereich von Megawatt auf einen Rotor einer elektrischen Maschine übertragen.

Demnach sind der hier beschriebene Schleifring und/oder die hier beschriebene Schleifringeinheit zur Übertragung einer elektrischen Leistung von mindestens 100 Kilowatt, insbesondere 500 Kilowatt, bevorzugt zumindest einem oder mehreren Megawatt, ausgebildet.

Vorteilhaft sind der hier beschriebene Schleifring und/oder die hier beschriebene Schleifringeinheit zur dauerhaften Übertragung der vorstehend genannten elektrischen Leistungen ausgebildet.

In einer weiteren vorteilhaften Ausgestaltung verlaufen zumindest ein Teil der Öffnungen durch den Kontaktbereich (5) hindurch, wobei die Öffnungen in radialer Richtung derart angeordnet sind, dass die Öffnungen Einkerbungen an einer Unterseite der Aussparung ausbilden.

Für eine besonders einfache Möglichkeit der Herstellung des Schleifrings, insbesondere der Kontaktbereiche, sind die Öffnungen des jeweiligen Kontaktbereiches jeweils an derselben tangentialen Position lokalisiert.

Vorzugsweise sind zumindest ein Teil der Aussparungen in radialer Richtung so positioniert, dass die Querschnittfläche der jeweiligen Aussparung in die Unterseite der Aussparung hineinragt. Die Öffnungen verlaufen in dieser Ausführung zumindest zum Teil in axialer Richtung in die Aussparung. Durch die Überschneidung des jeweiligen Querschnitts der Öffnung mit der Unterseite der Aussparung sind die Einprägungen in der Unterseite der Aussparung ausgebildet.

Vorzugsweise durchlaufen die Öffnungen in axialer Richtung den gesamten Kontaktbereich. Darüber hinaus perforiert die jeweilige Querschnittfläche der Öffnung die Unterseite der Aussparung, wobei die Perforierungen die Einkerbungen ausbilden.

Die Einkerbungen dienen zur Bereitstellung eines Luftstroms in radialer Richtung. Der in radialer Richtung verlaufende Luftstrom dient vorzugsweise zur verbesserten Kühlung der Schleifringelemente.

In einer vorteilhaften Ausgestaltung der Erfindung verlaufen die Öffnungen durch den Kontaktbereich zur axialen Richtung schief.

Vorzugsweise verlaufen die Öffnungen gegenüber der axialen Richtung (wind-) schief. Der Winkel zur axialen Richtung kann in tangentialer Richtung und/oder in radialer Richtung zwischen 2 und 30 Grad einnehmen. Der schiefe Verlauf der Öffnung in dem Kontaktbereich verstärkt vorteilhaft den Luftstrom in axialer Richtung, insbesondere bei einer Drehbewegung des Schleifrings.

Die Schleifringeinheit weist zumindest ein Schleifringelement, eine stationäre Anordnung, die dem jeweiligen Schleifringelement zugeordnet ist, und einen hier beschriebenen Schleifring auf, wobei das jeweilige Schleifringelement von einer stationären Anordnung so positioniert ist, dass das Schleifringelement eine Kontaktfläche des Schleifrings berührt.

Die stationäre Anordnung dient zur Positionierung der Schleifringelemente. Die Schleifringelemente sind vorzugsweise derart positioniert, dass bei einer Drehbewegung des Schleifrings die Schleifringelemente die jeweilige Kontaktfläche beaufschlagen. Die Schleifringelemente sind zur Übertragung der elektrischen Leistung, insbesondere des Rotorstroms, auf die jeweilige Kontaktfläche ausgebildet.

Die Schleifringelemente sind vorzugsweise als Schleifringbürsten ausgeführt. Schleifringelemente sind vorzugsweise aus einem Metall wie Bronze, Messing oder Edelstahl ausgebildet.

Die stationäre Anordnung ist vorzugsweise zumindest mittelbar an einen Stator der elektrischen Maschine angeordnet. Die elektrische Maschine weist vorzugsweise stromdurchflossene Wicklungen an ihrem Rotor auf.

Das jeweilige Schleifringelement weist vorzugsweise ebenfalls eine Aussparung auf. Die Aussparung ist vorzugsweise derart ausgeführt, dass der Luftstrom in die Aussparung eindringt und die Kühlung des Schleifringelements verbessert kühlt. Darüber hinaus kann das Schleifringelement zweiteilig ausgeführt sein, wobei die jeweiligen Teile des Schleifrings beabstandet angeordnet sind. Der Luftstrom geht hierbei zwischen den beiden Teilen des Schleifringelements hindurch. Durch die vergrößerte Oberfläche des Schleifringelements und durch den in radialer Richtung verlaufende Luftstrom, kommt es zu einer verbesserten Kühlung des Schleifringelements.

Die elektrische Maschine ist insbesondere als ein Generator für eine Windkraftanlage ausgebildet. Die elektrische Maschine weist einen hier beschriebenen Schleifring oder eine hier beschriebene Schleifringeinheit auf.

Die elektrische Maschine ist vorzugsweise für Antriebe in der Schwerindustrie sowie für einen Generator im Kraftwerksbereich ausgebildet.

Die Windkraftanlage weist einen hier beschriebenen Schleifring oder eine hier beschriebene Schleifringeinheit auf.

Der Schleifring oder die Schleifringeinheit dient vorzugsweise zur Übertragung von elektrischer Leistung, insbesondere des Rotorstroms, auf ein drehbares Element, insbesondere auf einen Rotor.

Im Folgenden wird die Erfindung anhand von Figuren näher beschrieben und erläutert. Die in den Figuren gezeigten Ausführungen sind lediglich beispielhaft und schränken die Erfindung keinesfalls ein. Die in den Figuren gezeigten Merkmale können einzeln oder in Kombination zu neuen Ausführungsformen der Erfindung zusammengesetzt werden.

Es zeigen:
- FIG 1: ein Schema einer Schleifringeinheit,
- FIG 2: einen beispielhaften Schleifring,
- FIG 3: einen beispielhaften Schleifring als Draufsicht,
- FIG 4: eine weitere Schnittdarstellung eines beispielhaften Schleifrings sowie
- FIG 5: eine weitere Schnittdarstellung eines beispielhaften Schleifrings.

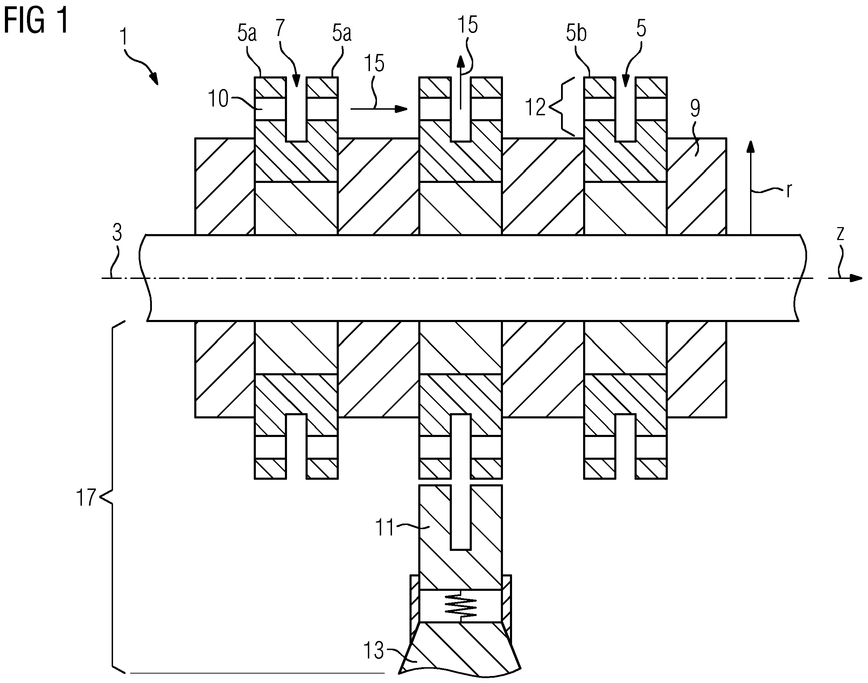

FIG 1 zeigt ein Schema einer Schleifringeinheit 17. Die Schleifringeinheit 17 umfasst einen Schleifring 1, ein Schleifringelement 11 und eine stationäre Anordnung 13. Der Schleifring 1 ist im Wesentlichen rotationssymmetrisch ausgebildet. Der Schleifring 1 umfasst Isolierbereiche 9 und Kontaktbereiche 5. Die Isolierbereiche 9 und die Kontaktbereiche 5 sind in axialer Richtung z auf der Achse 3 angeordnet. Gezeigt ist eine Ausführung des Schleifrings 1 mit drei Kontaktbereichen 5. Der jeweilige Kontaktbereich 5 dient Stromübertragung, insbesondere einer Phase eines Mehrphasen-Wechselstroms. Die Isolierbereiche 9 dienen zur Isolation der Kontaktbereiche 5. Der jeweilige Kontaktbereich 5 weist an seiner Mantelfläche Kontaktflächen 5a auf. Die Kontaktflächen 5a sind jeweils durch die Aussparung 7 unterbrochen. Die Aussparung 7 verläuft tangential umlaufend entlang der Mantelfläche des Kontaktbereiches 5. Die jeweilige Kontaktfläche 5a kann eine Rille 5b aufweisen (nicht gezeigt). Die Rille 5b dient vorzugsweise zur verbesserten Kühlung der Kontaktfläche 5a. Die Rille 5b ist jedoch optional und nicht wesentlich für die Erfindung. Der jeweilige Kontaktbereich 5 weist an seiner freiliegenden Stellfläche eine Öffnung 10 auf. Die Öffnung 10 dient zur Überführung eines Luftstroms 15 von der Außenseite des Schleifrings 1 in die Aussparung 7 des jeweiligen Kontaktbereiches 5. Die Achse 3 verläuft hierbei in axialer Richtung z, wobei der Schleifring 1 drehfest mit der Achse 3 verbunden ist. Die Achse 3 dient zur Drehbewegung des Schleifrings 1.

Das Schleifringelement 11 weist vorzugsweise ebenfalls eine Aussparung auf, die so angeordnet ist, dass der Luftstrom 15 in radialer Richtung r in die Aussparung des Schleifringelements strömen kann.

Durch die Drehbewegung des Schleifrings 1 wird ein Luftstrom 15 in radialer Richtung r erzeugt, wobei der Luftstrom 15 zur Kühlung des Schleifringelements 11 und zur Kühlung der Innenfläche der jeweiligen Aussparung 7 dient. Somit wird auch der Schleifring 1 gekühlt. Die Kontaktbereiche 5 bestehen zumindest in ihrem Außenbereich (der schraffierte Bereich) aus einem gut leitfähigen Material, insbesondere Bronze. Der jeweilige Isolierbereich 9 dagegen besteht in der Regel aus einem festen Kunststoff oder einem Keramik-Werkstoff.

Vorzugsweise sind die Isolierbereiche 9 und die Kontaktbereiche 5 einander benachbart angeordnet und aneinander befestigt, wobei die jeweiligen Kontaktbereiche 5 und die Isolierbereiche 9 miteinander drehfest verbunden sind.

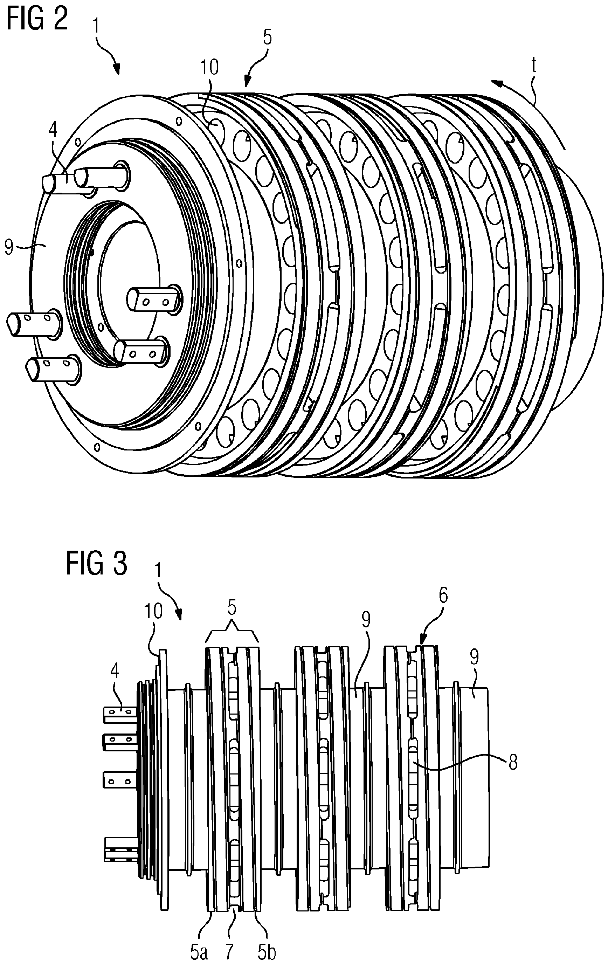

FIG 2 zeigt einen beispielhaften Schleifring 1. Der hier gezeigte Schleifring 1 umfasst drei Kontaktbereiche 5, wobei der jeweilige Kontaktbereich 5 auf der jeweiligen axialen Stirnseite von einem Isolierbereich 9 berührt wird. Der jeweilige Kontaktbereich 5 weist an seiner Mantelfläche mittig angeordnet die Aussparung 7 auf, wobei die Aussparung 7 in tangentialer Richtung t umlaufend in der Mantelfläche verläuft. Neben der Aussparung 7 verläuft auf der jeweiligen Kontaktfläche 5a eine Rille 5b. Die Rille 5b ist jedoch nicht wesentlich für den beispielhaften Schleifring. Weiter gezeigt sind Öffnungen 10, wobei die Öffnungen 10 an der jeweiligen Stirnseite des Kontaktbereiches 5 angeordnet sind. Die Öffnungen 10 verlaufen in axialer Richtung z und münden jeweils in die Aussparung 7 des jeweiligen Kontaktbereiches 7.

Der Schleifring 1 weist an seiner vorderen Stirnfläche Kontaktelemente 4 auf. Die Kontaktelemente 4 sind mit der jeweiligen Kontaktfläche 5a des jeweiligen Kontaktbereiches 5 elektrisch verbunden. Die in der Mitte sichtbare Bohrung des Schleifrings 1 dient zur Aufnahme der Achse.

FIG 3 zeigt einen beispielhaften Schleifring in Draufsicht. Der Schleifring 1 umfasst drei Kontaktbereiche 5, die jeweils von Stirnseiten der Isolierbereiche 9 beaufschlagt sind. Deutlich sichtbar ist die Aussparung 7 des Kontaktbereiches 5, wobei die Aussparung 7 in der Mitte der jeweiligen Mantelfläche des Kontaktbereiches 5 angeordnet ist. Der Kontaktbereich 5 weist an seiner Mantelfläche die Kontaktflächen 5a auf, wobei die Kontaktflächen 5a jeweils eine Rille 5b aufweisen. Die Rille dient zur Führung eines (in FIG 1 gezeigten) Schleifringelements 11. Die Aussparung 7 weist an ihrer Unterseite Einprägungen 8 (schwarz gekennzeichnet) auf, wobei die Einprägungen zur Verstärkung des radialen Luftstroms 15 ausgebildet sind. Die Einprägungen können durch die Anordnung der Öffnungen 10 in radialer Richtung r erzeugt sein. Zur

Ausbildung der Einprägungen 8 sind die Öffnungen 10 in radialer Richtung r so angeordnet, dass der jeweilige Querschnitt der Öffnung in die Unterseite der Aussparung ragt und einen Teil, nämlich die Einprägung 8 herausnimmt. Durch die Einprägung 8 wird die Unterseite der Aussparung 7 mit Einprägungen 8 versehen. Die Unterseite der Ausprägung 7 ist bis auf die Einprägungen 8 wie einer Mantelfläche eines Zylinders ausgebildet.

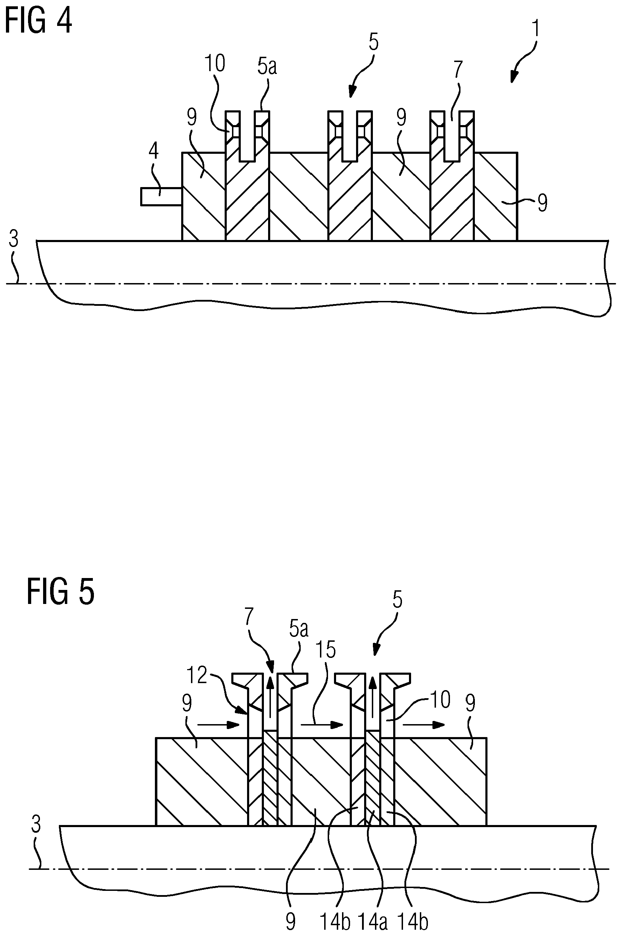

FIG 4 zeigt eine Schnittdarstellung eines beispielhaften Schleifrings 1. Der Schleifring 1 weist an seiner Stirnseite Kontaktelemente 4 auf. Kennzeichnend für den hier gezeigten Schleifring 1 ist, dass die Öffnungen 10 in den Kontaktbereichen 5 jeweils durch den Kontaktbereich hindurch gehen. Die jeweilige Querschnittfläche der Öffnung 10 ist an der Stirnseite des Kontaktbereiches 5 vergrößert. Die Öffnung 10 ist vorzugsweise im Wesentlichen zylinderförmig ausgeführt. Die Öffnung 10 ist an der jeweiligen Stirnseite vergrößert ausgeführt. Durch den vergrößerten Durchmesser der Öffnung 10 an der Außenseite des jeweiligen Kontaktbereiches 5 kann der Luftstrom 15 besser in die Aussparung 7 überführt werden.

FIG 5 zeigt eine weitere Schnittdarstellung eines beispielhaften Schleifrings 1. Der hier gezeigte Schleifring weist lediglich zwei Kontaktbereiche 5 auf. Die jeweilige Kontaktfläche 5a ist hierbei breiter ausgeführt als der Kontaktbereich im Bereich der Achse 3. Die jeweils vergrößerte Kontaktfläche 5a ist durch Vorsprünge um oberen Bereich (in radialer Richtung r) des jeweiligen Kontaktbereiches ausgebildet.

Weiter umfasst der Kontaktbereich 5 drei, im Wesentlichen zylinderförmig ausgebildeten Segmente 14a, 14b. Die In der Mitte zwischen zwei Decksegmenten 14b ist ein Zwischensegment 14a angeordnet. Die Mantelfläche des Zwischensegments 14a bildet die Unterseite der Aussparung 7. Die auf ihrer Innenseite nicht bedeckten Seiten der jeweiligen Deckschicht 14b bilden die Seiten der Aussparung 7. Die Aussparung 7 entsteht durch den größeren Radius der jeweiligen Deckschicht 14b im Vergleich zur Zwischenschicht 14a.

Die jeweils nach außen zeigenden Stirnseiten der jeweiligen Deckschicht 14 bildet in dem Bereich, der nicht von dem Isolierbereich 9 bedeckt ist, die Ringfläche 12. Vorzugsweise sind die Öffnungen 10 so in radialer Richtung r positioniert, dass die Querschnittfläche 10 der jeweiligen Öffnung 10 die Unterseite der Aussparung teilweise durchstößt und die Einprägung 8 ausbildet.

Das Zwischensegment 14a weist in der gezeigten Ausführung einen größeren Radius als der jeweilige Isolierbereich 9 auf. Darüber hinaus sind die Öffnungen 10 direkt an der radialen Unterseite der Ringfläche 12 angeordnet. Demnach bilden Öffnungen 10, die durch die Kontaktfläche 5 verlaufen, die Einprägung 8 in die Unterseite der Aussparung aus (Die Einprägung ist in FIG 5 der Übersicht halber nicht dargestellt.)

Zusammengefasst betrifft die Erfindung einen Schleifring 1, eine Schleifringeinheit 17 und eine elektrische Maschine, insbesondere zum Einsatz in einer Windkraftanlage. Der Schleifring 1 umfasst Isolierbereiche 9 und jeweils zwischen den Isolierbereichen 9 angeordnete Kontaktbereiche 5. Die Kontaktbereiche 5 sind jeweils Zylinderförmig ausgebildet und weisen an ihrer Mantelfläche Kontaktbereiche 5a auf. Die Kontaktbereiche 5a sind von einer Ausprägung 7 in tangentialer Richtung t durchtrennt. Die Aussparung 7 erstreckt sich soweit in den Kontaktbereich 5, so dass Öffnungen 10, welche sich in axialer Richtung z durch den Kontaktbereich 5 führen, in die Aussparung 7 münden. Ein Luftstrom 15, der in axialer Richtung z verläuft, wird durch die Öffnungen 10 in die Aussparung 7 überführt und in einen Luftstrom 15 in radialer Richtung r umgeleitet. Einprägungen 8 an der Unterseite der Aussparung 7 verstärken bei einer Drehbewegung des Schleifrings 1 den Luftstrom 15 in radialer Richtung r. Der Luftstrom 15 dient zur Kühlung von Schleifringelementen 11 und der Innenseite der Aussparung 7, wobei die Schleifringelemente 11 zur Übertragung von elektrischer Leistung, insbesondere des Rotorstroms, auf den Schleifring 1 vorgesehen sind.

## Patentansprüche

1. Schleifring (1), insbesondere für den Einsatz in einer Windkraftanlage, umfassend zumindest einen Kontaktbereich (5) und Isolationsbereiche (9), wobei die Isolationsbereiche (9) und die Kontaktbereiche (9) auf einer Achse (3) benachbart angeordnet sind, wobei der jeweilige Kontaktbereich (5) an seiner Mantelfläche eine Kontaktfläche (5a) aufweist, wobei der Kontaktbereich (5) eine in tangentialer Richtung (t) verlaufende Aussparung (7) aufweist, wobei die jeweilige axiale Stirnseite des Kontaktbereichs (5), insbesondere in einer Ringfläche (12), Öffnungen (10) aufweist, **dadurch gekennzeichnet, dass** die Öffnungen (10) jeweils in die Aussparung (7) führen.

2. Schleifring (1) nach Anspruch 1, wobei die Kontaktbereiche (5) an ihrer jeweiligen Stirnseite an einen Isolierbereich (9) grenzen.

3. Schleifring (1) nach Anspruch 1, wobei der jeweilige Kontaktbereich (5) auf der Mantelfläche des jeweiligen Isolierbereichs (9) angeordnet ist.

4. Schleifring (1) nach einem der vorangehenden Ansprüche, wobei die Öffnungen (10) an der Stirnseite des jeweiligen Kontaktbereiches (5) einen größeren Durchmesser aufweisen als in der Aussparung (7).

5. Schleifring (1) nach einem der vorangehenden Ansprüche, wobei die Mantelfläche des jeweiligen Kontaktbereiches (5) einen größeren Radius als die jeweils angrenzenden Isolierbereiche (9) aufweist.

6. Schleifring (1) nach einem der vorangehenden Ansprüche, wobei die jeweilige Kontaktfläche (5a, 5b) eine Rille (5b) aufweist.

7. Schleifring (1) nach einem der vorangehenden Ansprüche, wobei der Schleifring zur Übertragung von mindestens 100 Kilowatt, insbesondere mindestens einem Megawatt, ausgebildet ist.

8. Schleifring (1) nach einem der vorangehenden Ansprüche, wobei zumindest ein Teil der Öffnungen (10) durch den Kontaktbereich (5) hindurch verläuft, wobei die Öffnungen in radialer Richtung (r) derart angeordnet sind, dass die Öffnungen Einkerbungen (8) an einer Unterseite der Aussparung (7) ausbilden.

9. Schleifring (1) nach einem der vorangehenden Ansprüche, wobei die Öffnungen (1) durch den Kontaktbereich (5) zur axialen Richtung (z) schief verlaufen.

10. Schleifringeinheit (17), aufweisend zumindest ein Schleifringelement (11), eine stationäre Anordnung (13), die dem jeweiligen Schleifringelement (11) zugeordnet ist, und einen Schleifring (1) nach einem der vorangehenden Ansprüche, wobei das jeweilige Schleifringelement (11) durch eine stationäre Anordnung (13) so positioniert ist, dass das Schleifringelement (11) eine Kontaktfläche (5) des Schleifrings (1) berührt.

11. Elektrische Maschine, insbesondere ein Generator für eine Windkraftanlage, aufweisend einen Schleifring (1) nach einem der Ansprüche 1 bis 9 oder einer Schleifringeinheit (17) nach Anspruch 10.

12. Windkraftanlage, aufweisend einen Schleifring (1) nach einem der Ansprüche 1 bis 9 oder eine Schleifringeinheit (17) nach Anspruch 10.
